# EUROPÄISCHE PATENTANMELDUNG

(11) **EP 4 567 059 A1**
(43) Veröffentlichungstag der Anmeldung: **11.06.2025**
(21) Anmeldenummer: 23214688.6
(22) Anmeldetag: 06.12.2023
(51) Int. Cl.: C08J 11/06

(54) **VERFAHREN ZUR HERSTELLUNG VON PVC-REZYKLAT**

(71) Anmelder: D&G Recycling GmbH, 86720 Nördlingen (DE)
(72) Erfinder: Deinert, Dr. Jürgen, 37115 Duderstadt (DE)
(74) Vertreter: REHBERG HÜPPE + PARTNER

(57) **Zusammenfassung**

Zur Herstellung von PVC-Rezyklat (6) aus mit Phthalaten (8), Bleiverbindungen, Antimonverbindungen und/oder Bariumverbindungen (9) belasteten PVC-basierten Kunststoffteilchen (2) wird eine Teilchengröße der Kunststoffteilchen (2) in einem Bereich zwischen 1,0 mm und 10 mm eingestellt und werden die die Teilchengröße aufweisenden Kunststoffteilchen (2) mit einem Lösungsmittel (5) behandelt, das zu mindestens 75 Gew.-% aus Aceton, Isopropanol und/oder Ethoxypropanol besteht. Durch das Behandeln mit dem Lösungsmittel (5) werden die Phthalate (8), Bleiverbindungen, Antimonverbindungen und/oder Bariumverbindungen (9) über einen Extraktionszeitraum von nicht mehr als 6,0 h und bei einer Extraktionstemperatur von nicht mehr als 50°C aus den die Teilchengröße aufweisenden Kunststoffteilchen (2)extrahiert, wobei das PVC-Rezyklat (6) in den extrahierten Kunststoffteilchen (2) verbleibt.

## Beschreibung

### TECHNISCHES GEBIET DER ERFINDUNG

Die Erfindung bezieht sich auf ein Verfahren zur Herstellung von PVC-Rezyklat aus mit Phthalaten, Bleiverbindungen, Antimonverbindungen und/oder Bariumverbindungen belasteten PVC-basierten Kunststoffteilchen. Insbesondere bezieht sich die Erfindung auf ein Verfahren mit den Merkmalen des Oberbegriffs des unabhängigen Patentanspruchs 1.

Bei der Herstellung vieler Produkte aus PVC-basierten Kunststoffen, wurden den Kunststoffen über lang Zeit Phthalate als Weichmacher und Blei-, Antimon- und/oder Bariumverbindungen als Stabilisatoren oder zu anderen Zwecken zugesetzt. Nach der REACH-Verordnung der EU sind die genannten Zusätze nicht mehr zulässig. Hieraus resultieren Schwierigkeiten bei der Wiederverwertung von PVC-Kunststoffen, das heißt bei der Herstellung von PVC-Rezyklat auf Basis von mit Phthalaten, Bleiverbindungen, Antimonverbindungen und/oder Bariumverbindungen belasteten PVC-basierten Kunststoffteilchen. Dieses Problem wird auch zukünftig bestehen bleiben, nicht zuletzt weil viele von außerhalb der EU in die EU importierte Produkte auch zukünftig PVC-basierte Kunststoffe mit den in der EU eigentlich verbotenen Zusätzen aufweisen werden.

### STAND DER TECHNIK

Ein Verfahren zur Trennung und Rückgewinnung von Zielpolymeren und deren Aditiven aus einem polymerhaltigen Material mit den Merkmalen des Oberbegriffs des unabhängigen Patentanspruchs 1 ist aus der WO 2002/014413 A1 bekannt. Bei diesem Verfahren wird das polymerhaltige Material zerkleinert und dann mit einem ersten Lösungsmittel behandelt, wobei das Zielpolymer zusammen mit den Aditiven in dem ersten Lösungsmittel gelöst wird. Das gelöste Zielpolymer und die in derselben Lösung befindlichen Aditive werden mit einem mit dem ersten Lösungsmittel mischbaren, nicht wässrigen zweiten Lösungsmittel, in dem sich das Zielpolymer nicht löst, derart versetzt, dass das Zielpolymer ausgefällt wird, während die Aditive in gelöster Form verbleiben. Dann werden das ausgefällte Zielpolymer und mindestens ein in flüssiger Phase vorliegendes Aditiv voneinander getrennt. Das erste Lösungsmittel, das das Zielpolymer und die Aditive löst, wird bei dem bekannten Verfahren aus der Gruppe der niedermolekularen Alkohole (C₁-C₅) der zyklischen Ether (zum Beispiel Tetrahydrofuran), der aliphatischen (zum Beispiel Aceton, Methylethylketon) und zyklischen Ketone (zum Beispiel Cyclohexanon), basischen Ethergemische (zum Beispiel DBE) oder einer Mischung aus diesen ausgewählt. Das zweite Lösungsmittel ist ein niedermolekularer Alkohol. Das bei einer Weichmacher-Abtrennung von Weich-PVC zur Lösung des Zielpolymers und der Aditive eingesetzte Lösungsmittel ist Tetrahydrofuran oder Amylacetat-Xylol. Das weitere Lösungsmittel ist in diesem Fall Ethanol oder, aber nur in Verbindung mit THF, Hexan. Statt des zweiten Lösungsmittels kann bei dem bekannten Verfahren ein Lösungsmittelsystem aus Wasser und einem mit Wasser ein Zweiphasensystem bildenden dritten Lösungsmittel eingesetzt werden. Dann wird das Zielpolymer in der durch das dritte Lösungsmittel gebildeten Phase ausgefällt, während das Aditiv in dieser Phase in gelöster Form verbleibt. Das dritte Lösungsmittel ist ein aliphatischer, zum Beispiel n-Hexan, oder aromatischer Kohlenwasserstoff, zum Beispiel Toluol. Das bekannte Verfahren ist sehr zeitaufwändig, da das komplette Zielpolymer zunächst in dem Lösungsmittel aufgelöst werden muss. Um dieses Auflösen zu beschleunigen, wird das polymerhaltige Material zerkleinert, wozu eine Teilchengröße von ca. 2 mm angegeben ist. Dennoch bleibt das bekannte Verfahren zeitaufwändig, selbst wenn die Temperatur des Lösungsmittels erhöht wird. Zudem erfordert es, dass große Mengen an Lösungsmitteln im Kreis geführt werden und die unterschiedlichen Lösungsmittel müssen voneinander getrennt und gereinigt werden. Zudem werden beim in Lösung Bringen des Zielpolymers nichtlösliche Füllstoffe von dem Zielpolymer abgetrennt, die bei einer Wiederverwendung des Zielpolymers erneut zugesetzt werden müssen. Insgesamt ist das bekannte Verfahren daher so aufwändig, dass es bislang noch keine großtechnische Umsetzung erfahren hat.

### AUFGABE DER ERFINDUNG

Der Erfindung liegt die Aufgabe zugrunde, ein Verfahren mit den Merkmalen des Oberbegriffs des unabhängigen Patentanspruchs 1 aufzuzeigen, mit dem auf kostengünstige Weise ein auch innerhalb der EU verwendbares PVC-Rezyklat aus mit Phthalaten, Bleiverbindungen, Antimonverbindungen und/oder Bariumverbindungen belasteten PVC-basierten Kunststoffteilchen erhalten wird.

### LÖSUNG

Die Aufgabe der Erfindung wird durch ein Verfahren mit den Merkmalen des Patentanspruchs 1 gelöst. Bevorzugte Ausführungsformen des erfindungsgemäßen Verfahrens sind in den abhängigen Patentansprüchen 2 bis 15 definiert.

### BESCHREIBUNG DER ERFINDUNG

Bei dem erfindungsgemäßen Verfahren zu Herstellung von PVC-Rezyklat aus mit Phthalaten, Bleiverbindungen, Antimonverbindungen und/oder Bariumverbindungen belasteten Kunststoffteilchen wird eine Teilchengröße der Kunststoffteilchen in einem Bereich zwischen 1,0 mm und 10 mm eingestellt. Die die eingestellte Teilchengröße aufweisenden Kunststoffteilchen werden mit einem Lösungsmittel behandelt, wobei das Lösungsmittel zu mindestens 75 Gewichtsprozent aus Aceton, Isopropanol und/oder Ethoxypropanol besteht. Durch das Behandeln mit dem Lösungsmittel werden die Phthalate, Bleiverbindungen, Antimonverbindungen und/oder Bariumverbindungen aus den die Teilchengröße aufweisenden Kunststoffteilchen über einen Extraktionszeitraum von nicht mehr als 6,0 h und bei einer Extraktionstemperatur von nicht mehr als 50 °C extrahiert, wobei das PVC-Rezyklat in den extrahierten Kunststoffteilchen verbleibt.

Auch wenn bei dem erfindungsgemäßen Verfahren ähnliche oder gar dieselben Lösungsmittel wie bei dem aus der WO 2002/014413 A1 bekannten Verfahren verwendet werden, werden sie anders als dort nicht zum Auflösen von Zielpolymer verwendet. Vielmehr werden die Bedingungen der Extraktion so eingestellt, dass das herzustellende PVC-Rezyklat in den mit dem Lösungsmittel behandelten Kunststoffteilchen verbleibt. Zu diesen Bedingungen gehört der Extraktionszeitraum von aller höchstens sechse Stunden und die Extraktionstemperatur von aller höchstens 50 °C. So werden bei dem erfindungsgemäßen Verfahren selektiv die störenden Phthalate, Bleiverbindungen, Antimonverbindungen und/oder Bariumverbindungen aus den Kunststoffteilchen extrahiert, während nicht nur das PVC selbst, sondern auch Füllstoffe und ähnlich schwer lösbaren Aditive in den Kunststoffteilchen und damit in dem Rezyklat verbleiben, die sonst bei der Wiederverwendung des PVC erneut hinzugesetzt werden müssten.

Dabei ist es überraschend, dass mit grundsätzlich den selben Lösungsmitteln, wie sie in der WO 2002/014413 A1 als Lösungsmittel nicht nur zum Lösen der Aditive sondern auch des Zielpolymers beschrieben werden, selektiv Phthalate, Bleiverbindungen, Antimonverbindungen und/oder Bariumverbindungen, die im Folgenden auch gemeinsam als Störstoffe bezeichnet werden, aus den Kunststoffteilchen herausgelöst werden können, ohne größere Mengen des PVC aufzulösen. Zudem ist es überraschend, dass eine einstufige Extraktion der Kunststoffteilchen mit dem Lösungsmittel ausreichend ist, um alle genannten Störstoffe soweit aus den Kunststoffteilchen zu extrahieren, dass das in den Kunststoffteilchen verbleibende PVC-Rezyklat zumindest soweit frei von diesen Störstoffen wird, dass das Rezyklat auch innerhalb der EU, das heißt konform mit der REACH-Verordnung, für die Herstellung neuer Produkte verwendbar ist.

Vorzugsweise besteht das bei der Extraktion des erfindungsgemäßen Verfahrens eingesetzte Lösungsmittel zu mindestens 80 Gewichtsprozent aus Aceton, Isopropanol oder Ethoxypropanol. Besonders bevorzugt besteht es zu mindestens 80 Gewichtsprozent aus Aceton. Die genannten Lösungsmittel sind gut und sicher handhabbar und dabei von begrenzten Umweltgefährdungspotential und vergleichsweise preisgünstig.

Das bei der Extraktion des erfindungsgemäßen Verfahrens eingesetzte Lösungsmittel kann bis zu 20 Gewichtsprozent eines Cosolvens aufweisen, das aus Wasser, Ethanol und/oder anderen Kohlenwasserstoffverbindungen bestehen kann. Die anderen Kohlenwasserstoffverbindungen können insbesondere aliphatische Kohlenwasserstoffverbindungen sein. Vorzugsweise weisen diese sechs bis neun Kohlenstoffatome auf. Mit dem Cosolvens kann die Polarität des Lösungsmittels so eingestellt werden, dass die relevanten Störstoffe besonders gut extrahiert werden. Beispielsweise erhöht eine höhere Polarität des Lösungsmittels die Extraktionsrate von Blei- und Bariumsalzen, während eine verringerte Polarität die Extraktionsrate der Phthalate erhöht.

Weiterhin kann das Lösungsmittel bis zu 5 Gewichtsprozent eines alkalischen Lösungshilfsmittels aufweisen. Das alkalische Lösungshilfsmittel kann insbesondere Natriumhydroxid sein. Der Extraktionszeitraum kann durch Zugabe von Natronlauge erheblich verkürzt werden. Ab einem pH-Werts von etwa 9 tritt sowohl eine Hydrolyse der Phthalate als auch eine Verbesserung der Löslichkeit von Blei- und Antimonverbindungen auf. So ist es vorteilhaft, mit dem alkalischen Lösungshilfsmittel für die Extraktion einen pH-Wert des Lösungsmittels von mehr als 9,0 einzustellen.

Die Teilchengröße, die bei den Kunststoffteilchen eingestellt wird, bestimmt deren relative Oberfläche, über die hinweg die Extraktion erfolgt und die Länge der Diffusionswerge, die bei der Extraktion zu überwinden sind. Kleinere Kunststoffteilchen sind daher binnen kürzerer Extraktionszeiten extrahierbar als größere Kunststoffteilchen. Zugleich steigt aber mit abnehmender Größe der Kunststoffteilchen die Gefahr eines Verlustes an PVC, das heißt des Auflösens von PVC während der Extraktion, an. Daher wird die Teilchengröße der Kunststoffteilchen vorzugsweise auf mindestens 2,0 mm und noch mehr bevorzugt auf mindestens 3,0 mm und vorzugsweise auf nicht mehr als 6,0 mm und noch mehr bevorzugt auf nicht mehr als 5,0 mm eingestellt. Ganz besonders bevorzugt ist es, wenn alle Kunststoffteilchen eine möglichst gleiche Teilchengröße aufweisen, weil dann die weiteren Verfahrensbedingungen der Extraktion auf eben diese Teilchengröße genau abgestimmt werden kann. So ist es von Vorteil, die Teilchengröße der Kunststoffteilchen auf +/- 1,5 mm genau einzustellen. Bevorzugt wird die Teilchengröße auf +/- 1,0 mm und noch mehr bevorzugt auf +/- 0,5 mm genau eingestellt.

Der Extraktionszeitraum beträgt bei dem erfindungsgemäßen Verfahren vorzugsweise nicht mehr als 5,0 Stunden, noch mehr bevorzugt nicht mehr als 4,0 Stunden und am meisten bevorzugt nicht mehr als 3,0 Stunden. Oft beträgt er etwa 2 Stunden. Dabei beträgt die Extraktionstemperatur vorzugsweise mindestens 0°C und noch mehr bevorzugt mindestens 10 °C. Höchstens beträgt die Extraktionstemperatur vorzugsweise 40 °C und noch mehr bevorzugt 30 °C. Bei dieser vergleichsweise niedrigen Extraktionstemperatur läuft die Extraktion kontrolliert, das heißt beschränkt auf die zu entfernenden Störstoffe und ohne größeren Verlust an PVC ab.

Ein Gewichtsverhältnis der Kunststoffteilchen und des Lösungsmittels während des Behandelns, das heißt der Extraktion, ist typischerweise nicht größer als 1:4 und vorzugsweise nicht größer als 1:9. Mit anderen Worten machen die Kunststoffteilchen maximal 20 Gewichtsprozent und vorzugsweise maximal 10 Gewichtsprozent der Suspension der in dem Lösungsmittel suspendierten Kunststoffteilchen aus. Gleichzeitig ist das Gewichtsverhältnis der Kunststoffteilchen und des Lösungsmittels typischerweise nicht kleiner als 1:99 und vorzugsweise nicht kleiner als 1:60. Mit anderen Worten machen die Kunststoffteilchen an der Suspension mindestens ein Gewichtsprozent und vorzugsweise mindestens 1,7 Gewichtsprozent aus. In jedem Fall wird das Lösungsmittel in einem erheblichen Überschuss zu den Kunststoffteilchen eingesetzt, um die Störstoffe effektiv zu extrahieren. Um den Konzentrationsunterschied der Störstoffe zwischen den Kunststoffteilchen und dem Lösungsmittel möglichst hoch zu halten, kann das Lösungsmittel mit den Kunststoffteilchen während der Extraktion gerührt werden. Alternativ oder zusätzlich kann das Lösungsmittel während der Extraktion mindestens einmal durch frisches Lösungsmittel derselben Zusammensetzung oder einer anderen Zusammensetzung ausgetauscht werden oder im Gegenstrom zu den Kunststoffteilchen durch einen Reaktor geführt werden. Der Konzentrationsunterschied ist die auf die Störstoffe in Richtung aus den Kunststoffteilchen heraus wirkende Triebkraft.

Wenn die Kunststoffteilchen nach dem Behandeln mit dem Lösungsmittel einem gegenüber Normaldruck um mindestens 500 hPa reduzierten Druck ausgesetzt werden, kann dadurch das Lösungsmittel komplett verdampft und auf diese Weise komplett von den Kunststoffteilchen entfernt werden. Die Störstoffe können durch Filterung mit Aktivkohle und/oder durch Destillation bei reduziertem Druck und/oder erhöhter Temperatur wieder von dem Lösungsmittel abgetrennt werden. Das derart aufbereitete Lösungsmittel kann erneut zum Extrahieren der Störstoffe aus den Kunststoffteilchen eingesetzt werden.

Das erfindungsgemäße Verfahren wird insbesondere so durchgeführt, dass die Störstoffe allein durch das Behandeln mit dem Lösungsmittel in einem solchem Ausmaß von den Kunststoffteilchen entfernt werden, dass das in den Kunststoffteilchen verbleibende PVC-Rezyklat weniger als 0,1 Gewichtsprozent Phthalate, weniger als 0,1 Gewichtsprozent Bleiverbindungen, weniger als 0,1 Gewichtsprozent Antimonverbindungen und weniger als 0,1 Gewichtsprozent Bariumverbindungen enthält. Damit ist das PVC-Rezyklat gemäß der REACH-Verordnung innerhalb der EU für die Herstellung neuer Produkte aus PVC einsetzbar.

Konkret können die Kunststoffteilchen, aus denen die Störstoffe durch die erfindungsgemäße Extraktion extrahiert wurden, direkt, gegebenenfalls in Verbindung mit Zuschlagstoffen, als Ausgangsmaterial für neue Produkte verwendet werden. Die extrahierten Kunststoffteilchen können aber zuvor auch noch weiter aufbereitetet werden, um ein PVC-Rezyklat mit noch weiter verbesserten Eigenschaften zu erhalten.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand eines in der Figur dargestellten bevorzugten Ausführungsbeispiels weiter erläutert und beschrieben.

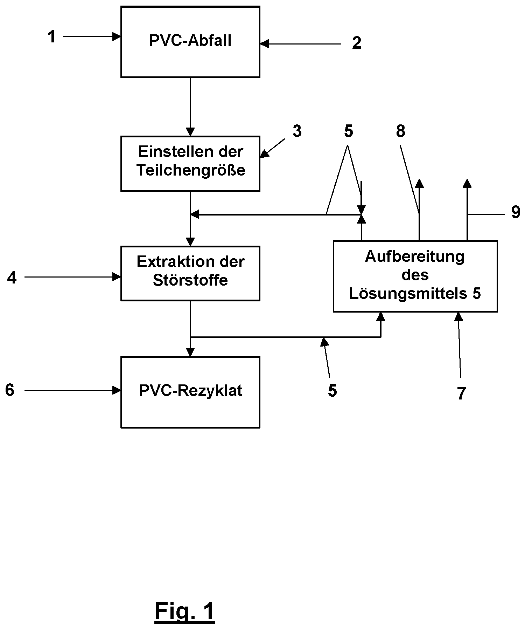

- **Fig. 1**: ist ein Flussdiagramm zum Ablauf des erfindungsgemäßen Verfahrens.

### FIGURENBESCHREIBUNG

Das in **Fig. 1** in Form eines Flussdiagramms dargestellte Verfahren dient zur Aufbereitung von PVC-Abfall 1 in Form von PVC-basierten Kunststoffteilchen 2. Die PVC-basierten Kunststoffteilchen enthalten Füllstoffe und andere Zusätze, die bei einer Wiederverwertung nutzbar sind, aber auch Störstoffe, die vor einer Wiederverwertung entfernt werden müssen. Zu diesen Störstoffen zählen insbesondere Phthalate, die als Weichmacher in PVC-Verbindungen eingesetzt wurden, sowie Bleiverbindungen, Antimonverbindungen und Bariumverbindungen, die als Stabilisatoren für PVC-Kunststoffe verwendet wurden. Um diese Störstoffe zu entfernen, erfolgt zunächst ein Einstellen 3 der Teilchengröße der Kunststoffteilchen 2 durch Zerkleinern und/oder Sieben. Ziel ist eine möglichst gleiche Teilchengröße aller Kunststoffteilchen in einem bevorzugtem Bereich von 2,0 mm bis 6,0 mm und mit einer bevorzugten Abweichung der Teilchengröße von nicht mehr als +/- 1,0 mm von einer mittleren Teilchengröße. In einer Extraktion 4 werden die Kunststoffteilchen 2 mit der eingestellten Teilchengröße mit Lösungsmittel 5 behandelt, um die genannten Störstoffe zu extrahieren. Die Extraktion 4 wird dabei so geführt, dass ein PVC-Rezyklat 6, welches für die Wiederverwendung vorgesehen ist, in den extrahierten Kunststoffteilchen verbleibt, während die Störstoffe in dem Lösungsmittel 5 in Lösung gehen und mit dem Lösungsmittel 5 von den Kunststoffteilchen 2 abgetrennt werden können. Das PVC-Rezyklat 6 enthält neben PVC Füllstoffe und andere Zusätze, die einer Wiederverwendung des PVC-Rezyklat 6 nicht nur nicht entgegenstehen, sondern für diese Wiederverwendung sogar nützlich sind. Bei einer Aufbereitung 7 des Lösungsmittels 5 werden durch fraktionierte Destillation die Phthalate 8 und die Blei-, Antimon- und Bariumverbindungen 9 von dem Lösungsmittel 5 abgetrennt, das dann zurück in die Extraktion 4 geführt wird.

In den nachfolgend dokumentierten Beispielen wurden die jeweils auf eine Teilchengröße von 2 bis 5 mm eingestellten Kunststoffteilchen in einem Gewichtsverhältnis von 1:19 in dem jeweiligen Lösungsmittel suspendiert und unter Rühren mit dem Lösungsmittel extrahiert, wobei das mit den Störstoffen beladene Lösungsmittel kontinuierlich ausgeschleust, gereinigt und wieder in die Extraktion zurück geführt wurden. Nach dem angegebenen Extraktionszeitraum bei der angegebenen Extraktionstemperatur waren die jeweiligen Störstoffe sämtlich bis unter 0,1 Gewichtsprozent aus den Kunststoffteilchen entfernt, so dass in den Kunststoffteilchen ein wiederverwendbares PVC-Rezyklat zurückblieb.

### Beispiel 1:

| | |
|---|---|
| Material: | PVC-w aus Kabelrezyklat, Mahlgut 2-5 mm |
| Konzentration: | 5 Gew.-% im Lösungsmittel |
| Eingangsgehalt Störstoffe: | 22.2 Gew.-% Phthalate, 3.2 Gew.-% Bleistearat |
| Lösungsmittel: | 80 Gew.-% Ethoxypropanol, 20 Gew.-% Hexan |
| Extraktionstemperatur: | 40 °C |
| Extraktionszeitraum: | 120 min |
| Restgehalt Störstoffe: | < 0,1 Gew.-% Phthalate, < 0,1 Gew.-% Bleistearat |

### Beispiel 2:

| | |
|---|---|
| Material: | PVC-w aus Planen, entfasert, Mahlgut 2-5 mm |
| Konzentration: | 5 Gew.-% im Lösungsmittel |
| Eingangsgehalt Störstoffe: | 32.1 Gew.-% Phthalate, 1,8 Gew.-% Bleistearat 0,9 Gew.-% Bleioxid, 1,9 Gew.-% Antimonoxid |
| Lösungsmittel: | 90 Gew.-% Aceton, 10 Gew.-% Ethanol |
| Extraktionstemperatur: | 30 °C |
| Extraktionszeitraum: | 150 min |
| Restgehalt Störstoffe: | < 0,1 Gew.-% Phthalate, < 0,1 Gew.-% Bleistearat < 0,1 Gew.-% Bleioxid, < 0,1 Gew.-% Antimonoxid |

### Beispiel 3:

| | |
|---|---|
| Material: | PVC-w aus Bodenbelag, Mahlgut 2-5 mm |
| Konzentration: | 5 Gew.-% im Lösungsmittel |
| Eingangsgehalt Störstoffe: | 36,2 Gew.-% Phthalate, 1,9 Gew.-% Bleistearat 2.6 Gew.-% Antimonoxid |
| Lösungsmittel: | 96 Gew.-Isopropanol, 4 Gew.-% Natriumhydroxid |
| Extraktionstemperatur: | 20 °C |
| Extraktionszeitraum: | 180 min |
| Restgehalt Störstoffe: | < 0,1 Gew.-% Phthalate, < 0,1 Gew.-% Bleistearat < 0,1 Gew.-% Antimonoxid |

### BEZUGSZEICHENLISTE

- 1: PVC-Abfall
- 2: Kunststoffteilchen
- 3: Einstellen
- 4: Extraktion
- 5: Lösungsmittel
- 6: PVC-Rezyklat
- 7: Aufbereitung
- 8: Phthalate
- 9: Blei-, Antimon- und Bariumverbindungen

## Patentansprüche

1. Verfahren zur Herstellung von PVC-Rezyklat (6) aus mit Phthalaten (8), Bleiverbindungen, Antimonverbindungen und/oder Bariumverbindungen (9) belasteten PVC-basierten Kunststoffteilchen (2),
- wobei eine Teilchengröße der Kunststoffteilchen (2) in einem Bereich zwischen 1,0 mm und 10 mm eingestellt wird und
- wobei die die eingestellte Teilchengröße aufweisenden Kunststoffteilchen (2) mit einem Lösungsmittel (5) behandelt werden, wobei das Lösungsmittel (5) zu mindestens 75 Gew.-% aus Aceton, Isopropanol und/oder Ethoxypropanol besteht,
**dadurch gekennzeichnet,**
- **dass** durch das Behandeln mit dem Lösungsmittel (5) die Phthalate (8), Bleiverbindungen, Antimonverbindungen und/oder Bariumverbindungen (9) über einen Extraktionszeitraum von nicht mehr als 6,0 h und bei einer Extraktionstemperatur von nicht mehr als 50°C aus den die Teilchengröße aufweisenden Kunststoffteilchen (2) extrahiert werden, wobei das PVC-Rezyklat (6) in den extrahierten Kunststoffteilchen (2) verbleibt.

2. Verfahren nach Anspruch 1, **wobei** das Lösungsmittel (5) zu mindestens 80 Gew.-% aus Aceton, Isopropanol oder Ethoxypropanol und vorzugsweise aus Aceton besteht.

3. Verfahren nach einem der vorhergehenden Ansprüche, **wobei** das Lösungsmittel (5) 0 bis 20 Gew.-% eines Cosolvenz aufweist, das aus Wasser, Ethanol und/oder anderen Kohlenwasserstoffverbindungen besteht.

4. Verfahren nach Anspruch 3, **wobei** das die anderen Kohlenwasserstoffverbindungen aliphatische Kohlenwasserstoffverbindungen sind und vorzugsweise 6 bis 9 Kohlenstoffatome aufweisen.

5. Verfahren nach einem der vorhergehenden Ansprüche, **wobei** das Lösungsmittel (5) 0 bis 5 Gew.-% eines alkalischen Lösungshilfsmittels aufweist, das vorzugsweise Natriumhydroxid ist.

6. Verfahren nach Anspruch 5, **wobei** das mit dem alkalischen Lösungshilfsmittel während des Behandelns ein pH-Wert des Lösungsmittels (5) von mehr als 9,0 eingestellt wird.

7. Verfahren nach einem der vorhergehenden Ansprüche,
- **wobei** die Teilchengröße auf mindestens 2,0 mm und vorzugsweise auf mindestens 3,0 mm und/oder auf nicht mehr als 6,0 mm und vorzugsweise auf nicht mehr als 5,0 mm eingestellt wird und/oder
- **wobei** die Teilchengröße auf maximal +/- 1,5 mm, vorzugsweise auf maximal +/- 1,0 mm und noch mehr bevorzugt auf maximal +/- 0,5 mm genau eingestellt wird.

8. Verfahren nach einem der vorhergehenden Ansprüche, **wobei** der Extraktionszeitraum nicht mehr als 5,0 h, vorzugsweise nicht mehr als 4,0 h und am meisten bevorzugt nicht mehr als 3,0 h beträgt.

9. Verfahren nach einem der vorhergehenden Ansprüche, **wobei** die Extraktionstemperatur mindestens 0°C und vorzugsweise mindestens 10°C und/oder höchstens 40°C und vorzugsweise höchstens 30°C beträgt.

10. Verfahren nach einem der vorhergehenden Ansprüche, **wobei** das ein Gewichtsverhältnis der Kunststoffteilchen (2) und des Lösungsmittels (5) während des Behandelns nicht größer ist als 1:4 und vorzugsweise nicht größer als 1:9 und/oder nicht kleiner ist als 1:99 und vorzugsweise nicht kleiner ist als 1:60.

11. Verfahren nach einem der vorhergehenden Ansprüche, **wobei** während des Behandelns das Lösungsmittel (5) mit den Kunststoffteilchen (2) gerührt wird und/oder das Lösungsmittel (5) im Gegenstrom zu den Kunststoffteilchen (2) geführt wird.

12. Verfahren nach einem der vorhergehenden Ansprüche, **wobei** das die Kunststoffteilchen (2) nach dem Behandeln einem gegenüber Normaldruck um mindestens 500 hPa reduzierten Druck ausgesetzt werden, um das Lösungsmittel (5) komplett zu entfernen.

13. Verfahren nach einem der vorhergehenden Ansprüche, **wobei** das Lösungsmittel (5) nach dem Behandeln aufbereitet wird, um enthaltene Phthalate (8) , Antimonverbindungen und/oder Bariumverbindungen (9) daraus zu entfernen, und dann erneut zu dem Behandeln verwendet wird.

14. Verfahren nach einem der vorhergehenden Ansprüche, **wobei** die Phthalate (8), Bleiverbindungen, Antimonverbindungen und/oder Bariumverbindungen (9) wieder von dem Lösungsmittel (5) getrennt werden durch:
- Filterung mit Aktivkohle und/oder
- Destillation bei reduziertem Druck und/oder erhöhter Temperatur.

15. Verfahren nach einem der vorhergehenden Ansprüche, **wobei** die Phthalate (8), Bleiverbindungen, Antimonverbindungen und/oder Bariumverbindungen (9) ausschließlich durch das Behandeln mit dem Lösungsmittel (5) von den Kunststoffteilchen (2) entfernt werden, wobei das PVC-Rezyklat (6) mit weniger als 0,1 Gew.-% Phthalate (8), weniger als 0,1 Gew.-% Bleiverbindungen, weniger als 0,1 Gew.-% Antimonverbindungen und weniger als 0,1 Gew.-% Bariumverbindungen (9) erhalten wird.
